# EUROPÄISCHE PATENTSCHRIFT

(11) **EP 3 530 453 B1**
(45) Veröffentlichungstag und Bekanntmachung des Hinweises auf die Patenterteilung: **30.03.2022**
(21) Anmeldenummer: 18158183.6
(22) Anmeldetag: 22.02.2018
(51) Int. Cl.: B32B 7/02, B32B 7/12, B32B 27/08, B32B 27/30, B32B 27/32, B32B 27/34, B32B 1/08, B60K 15/01

(54) **MEHRSCHICHTIGE KRAFTFAHRZEUG-ROHRLEITUNG**
MULTILAYER MOTOR VEHICLE PIPELINE
CONDUITE DU VÉHICULE AUTOMOBILE MULTICOUCHE

(43) Veröffentlichungstag der Anmeldung: 28.08.2019
(60) Teilanmeldung: 19168699.7
(73) Patentinhaber: TI Automotive (Fuldabrück) GmbH, 34277 Fuldabrück (DE)
(72) Erfinder: ZIMMER, Werner, 34212 Melsungen/Röhrenfurth (DE); FAHRENHOLZ, Frank, 34128 Kassel (DE); SIEGFRIED, Arnold, 34128 Kassel (DE); SCHRAMOWSKI, Martin, 34134 Kassel (DE)
(74) Vertreter: Andrejewski - Honke Patent- und Rechtsanwälte Partnerschaft mbB

(56) Entgegenhaltungen:
- EP-A1- 1 574 330
- EP-A1- 2 772 354
- DE-A1-102011 089 616
- US-A1- 2006 083 884

## Beschreibung

Die Erfindung betrifft eine mehrschichtige Kraftfahrzeug-Rohrleitung, insbesondere zur Durchleitung von Kraftstoffen, wobei die Rohrleitung zumindest fünf Schichten aufweist. Die erfindungsgemäße mehrschichtige Kraftfahrzeugrohrleitung wird insbesondere als Kraftstoffrohrleitung in Fahrzeugen eingesetzt. Dabei kann die Kraftfahrzeugrohrleitung auch als Entlüftungsleitung in Tankentlüftungssystemen verwendet werden. In diesem Fall wird die Rohrleitung insbesondere mit Kraftstoffdämpfen und ihren Kondensaten beaufschlagt.

Mehrschichtige Kraftfahrzeug-Rohrleitungen der vorstehend genannten Art sind aus der Praxis in unterschiedlichen Ausführungsformen bekannt. Viele dieser bekannten Rohrleitungen weisen den Nachteil auf, dass die Rohrleitungsschichten beim Durchleiten von Kraftstoffen unerwünschten Auswaschungen von Schichtkomponenten ausgesetzt sind. Das betrifft vor allem die in Kontakt mit dem Kraftstoff stehende Innenschicht, aber auch die angrenzenden mittleren Schichten. Oftmals enthalten die Innenschichten in geringen Mengen Oligomere, die von dem Kraftstoff ausgewaschen werden können und sich dann im Kraftstoffsystem niederschlagen. Dort können sie zu Problemen führen, insbesondere an Düsen und dergleichen. Die bekannten Rohrleitungen lassen im Hinblick auf ihre Kraftstoffbeständigkeit bzw. im Hinblick auf ihre Resistenz gegenüber den Kraftstoffen zu wünschen übrig. Nicht zuletzt aus diesem Grunde genügen auch die Barriereeigenschaften dieser bekannten Rohrleitungen nicht allen Anforderungen. Man hat bereits versucht, dieses Problem durch Variierung der Schichten - insbesondere der Innenschichten - zu lösen. Verbesserungen im Bezug auf unerwünschte Auswaschungen gingen hier aber zu Lasten der mechanischen Widerstandsfähigkeit und/oder der thermischen Resistenz der Rohrleitungen. Auch sind viele dieser bekannten Rohrleitungen aufgrund der Materialwahl nur kostspielig herstellbar. Das gilt vor allem für Kraftfahrzeugrohrleitungen mit Innenschichten aus Fluorpolymeren, insbesondere aus ETFE. ETFE hat weiterhin den Nachteil, dass es im Brandfall zu gefährlichen bzw. gesundheitsschädlichen Fluorverbindungen führt.

Beispielsweise beschreibt DE 10 2011 089 616 A1 eine mehrlagige Kraftstoffleitung, wobei die innere Schicht dieser Kraftstoffleitung mit dem Kraftstoff in Berührung kommt. Es soll eine die Außenfläche der Kraftstoffleitung bildende äußere Schicht vorhanden sein, die aus einem Polyamid gebildet ist. Nach einer empfohlenen Ausführungsform ist eine Sperrschicht vorhanden, die aus EVOH oder einem Fluorpolymer bestehen kann. Insgesamt ist ein Aggregat aus einer Außenschicht, einer Sperrschicht und einer Innenschicht beschrieben, wobei zwischengeschaltete Haftvermittlerschichten vorhanden sein können. Weiterhin kann die innere Schicht bzw. die Innenschicht der Kraftstoffleitung aus einem Polyethylen bestehen.

Demgegenüber liegt der Erfindung das technische Problem zugrunde, eine mehrschichtige Kraftfahrzeug-Rohrleitung der eingangs genannten Art anzugeben, bei der die vorstehend geschilderten Nachteile vermieden werden können, die sowohl eine verbesserte chemische Resistenz bzw. Resistenz gegen Auswaschungen als auch eine ausreichende mechanische Widerstandsfähigkeit sowie eine optimale Resistenz gegenüber verschiedenen Temperaturen, insbesondere höheren Temperaturen aufweist. Außerdem soll diese Rohrleitung möglichst kostengünstig herstellbar sein.

Zur Lösung des technischen Problems lehrt die Erfindung eine mehrschichtige Kraftfahrzeug-Rohrleitung, insbesondere zur Durchleitung von Kraftstoffen, wobei die Rohrleitung zumindest fünf Schichten aufweist und zwar mit folgendem Schichtaufbau von außen nach innen:
- eine Außenschicht aus zumindest einem Polyamid,
- eine erste Trägerschicht aus Polyamid,
- eine Sperrschicht aus zumindest einer Komponente aus der Gruppe "Ethylen-Vinylalkohol-Copolymer (EVOH), Fluorpolymer",
- eine Zwischenschicht,
- eine Innenschicht aus Polyethylen,

wobei die Dicke der ersten Trägerschicht mindestens 1,2-mal dicker ist als die Sperrschicht, und
wobei die Gesamtschichtdicke der Rohrleitung 0,7 bis 2,5 mm, vorzugsweise 0,8 bis 2 mm und bevorzugt 0,85 bis 1,8 mm beträgt. Ganz besonders bevorzugt ist eine Gesamtschichtdicke der Rohrleitung zwischen 0,85 und 1,7 mm.

Gemäß einer empfohlenen Ausführungsform der Erfindung besteht die Außenschicht der Rohrleitung aus Polyamid 12 bzw. im Wesentlichen aus Polyamid 12. Es empfiehlt sich, dass die Dicke der Außenschicht 5 % bis 60 %, vorzugsweise 7% bis 45 % und bevorzugt 10 % bis 40 % der Gesamtwanddicke der Rohrleitung beträgt. Es liegt dabei im Rahmen der Erfindung, dass die Dicke der Außenschicht maximal 0,4 mm beträgt und bevorzugt im Bereich zwischen 0,1 und 0,4 mm, sehr bevorzugt im Bereich zwischen 0,2 und 0,4 mm liegt.

Eine besondere empfohlene Ausführungsform der Erfindung ist dadurch gekennzeichnet, dass zwischen der Außenschicht und der Trägerschicht zumindest eine Haftvermittlerschicht und vorzugsweise eine Haftvermittlerschicht zwischengeschaltet ist. Vorzugsweise wird eine Haftvermittlerschicht auf Basis von Polyamid oder auf Basis eines Polyolefins eingesetzt. Wenn eine Haftvermittlerschicht auf Basis von Polyamid verwendet wird, handelt es sich empfohlenermaßen um ein modifiziertes Polyamid, vorzugsweise um ein modifiziertes Polyamid auf Basis von Polyamid 612. - Wenn eine Haftvermittlerschicht auf Basis eines Polyolefins eingesetzt wird, handelt es sich vorzugsweise um ein mit einem Carbonsäurederivat, bevorzugt mit einem Maleinsäurederivat und sehr bevorzugt um ein mit Maleinsäureanhydrid modifiziertes Polyolefin, insbesondere Polyethylen. - Zweckmäßigerweise beträgt die Dicke der Haftvermittlerschicht 3 % bis 30 %, vorzugsweise 5 % bis 20 % und bevorzugt 5 % bis 15 % der Gesamtwanddicke der Rohrleitung. Die Dicke der Haftvermittlerschicht beträgt zweckmäßigerweise 0,03 bis 0,15 mm und vorzugsweise 0,03 bis 0,1 mm.

Eine sehr empfohlene Ausführungsform der Erfindung ist dadurch gekennzeichnet, dass die Trägerschicht aus Polyamid 6 bzw. im Wesentlichen aus Polyamid 6 besteht. Grundsätzlich kann die erste Trägerschicht auch aus zumindest einem bzw. aus einem Polyamid aus der Gruppe "Polyamid 612, Polyamid 12, Polyamid 10, Polyamid 11, Co-Polyamid 6/6.6, Co-Polyamid 6/12" bestehen bzw. im Wesentlichen bestehen. - Es liegt im Rahmen der Erfindung, dass die Dicke der Trägerschicht 5 % bis 70 %, vorzugsweise 10 % bis 60 % und bevorzugt 15% bis 60% der Gesamtwanddicke der Rohrleitung beträgt. Zweckmäßiger-weise ist die Dicke der Trägerschicht mindestens doppelt so dick und bevorzugt mindestens 3-mal so dick wie die Dicke der Haftvermittlerschicht. Es empfiehlt sich, dass die Dicke der Trägerschicht 0,1 bis 0,8 mm, vorzugsweise 0,1 bis 0,75 mm und bevorzugt 0,2 bis 0,6 mm beträgt. Nach bewährter Ausführungsform der Erfindung ist die Trägerschicht dicker als die Sperrschicht und vorzugsweise mindestens doppelt so dick wie die Sperrschicht. Nach einer Ausführungsvariante der Erfindung ist die Trägerschicht mindestens 2,5-mal so dick wie die Sperrschicht. Es liegt im Rahmen der Erfindung, dass die Trägerschicht dicker ist als die Außenschicht und empfohlermaßen mindestens 1,5-mal dicker ist als die Außenschicht.

Eine Ausführungsform, der im Rahmen der Erfindung besondere Bedeutung zukommt, ist dadurch gekennzeichnet, dass die Sperrschicht aus Ethylen-Vinylalkohol-Copolymer (EVOH) bzw. im Wesentlichen aus EVOH besteht. Dieses Material hat sich in Kombination mit den weiteren erfindungsgemäßen Schichten ganz besonders als Sperrschicht bewährt. - Es liegt im Rahmen der Erfindung, dass die Dicke der Sperrschicht 5 % bis 50 %, vorzugsweise 5 % bis 45 % und bevorzugt 10 % bis 40 % der Gesamtwanddicke der Rohrleitung beträgt. Zweckmäßigerweise beträgt die Dicke der Sperrschicht 0,05 bis 0,4 mm, vorzugsweise 0,05 bis 0,3 mm und bevorzugt 0,75 bis 0,25 mm.

Eine bevorzugte Ausführungsform der Erfindung ist dadurch gekennzeichnet, dass die Zwischenschicht aus Polyamid 6 bzw. im Wesentlichen aus Polyamid 6 besteht. Grundsätzlich kann die zweite Trägerschicht auch aus zumindest einem bzw. aus einem Polyamid aus der Gruppe "Polyamid 612, Polyamid 12, Polyamid 10, Polyamid 11, Co-Polyamid 6/6.6, Co-Polyamid 6/12" bestehen bzw. im Wesentlichen bestehen. Im Rahmen dieser bevorzugten Ausführungsform übernimmt die Zwischenschicht die Funktion einer zweiten Trägerschicht. Bezüglich dieser Ausführungsform wird nachfolgend die oben erläuterte Trägerschicht auch als erste Trägerschicht und die Zwischenschicht als zweite Trägerschicht bezeichnet. Es liegt im Rahmen der Erfindung, dass die Dicke der Zwischenschicht bzw. der zweiten Trägerschicht 5 % bis 70 %, vorzugsweise 10% bis 60% und bevorzugt 15% bis 60% sowie sehr bevorzugt 15% bis 55% der Gesamtwanddicke der Rohrleitung beträgt. Zweckmäßigerweise beträgt die Dicke der Zwischenschicht bzw. der zweiten Trägerschicht 0,1 bis 0,8 mm, vorzugsweise 0,1 bis 0,75 mm und bevorzugt 0,2 bis 0,6 mm. Es empfiehlt sich, dass die Zwischenschicht bzw. die zweite Trägerschicht dicker ist als die Sperrschicht und bevorzugt mindestens doppelt so dick ist wie die Sperrschicht. Gemäß einer Ausführungsvariante der Erfindung ist die Zwischenschicht bzw. die zweite Trägerschicht mindestens 2,5-mal so dick wie die Sperrschicht. Weiterhin liegt es im Rahmen der Erfindung, dass die Zwischenschicht bzw. die zweite Trägerschicht dicker ist als die Außenschicht und vorzugsweise mindestens 1,5-mal dicker ist als die Außenschicht.

Gemäß einer weiteren bevorzugten Ausführungsform der Erfindung ist die Zwischenschicht als Haftvermittlerschicht zwischen der Sperrschicht und der Innenschicht ausgebildet. Vorzugsweise handelt es sich dabei um eine Haftvermittlerschicht auf Basis eines Polyamids und/oder um eine Haftvermittlerschicht auf Basis eines Polyolefins. Diese Haftvermittlerschicht ist dann in der Ausführungsvariante mit der Haftvermittlerschicht zwischen der Außenschicht und der ersten Trägerschicht eine zweite Haftvermittlerschicht in der erfindungsgemäßen Rohrleitung. Zweckmäßigerweise gilt für diese zweite Haftvermittlerschicht analoges wie für die oben beschriebene erste Haftvermittlerschicht. Die dort beschriebenen Ausführungsformen treffen dann auch auf die zweite Haftvermittlerschicht zwischen Sperrschicht und Innenschicht zu. Das betrifft insbesondere das Material der Haftvermittlerschicht und/oder die Dicke der Haftvermittlerschicht.

Erfindungsgemäß besteht die Innenschicht aus Polyethylen bzw. im Wesentlichen aus Polyethylen. Nach sehr bevorzugter Ausführungsform, der im Rahmen der Erfindung ganz besondere Bedeutung zukommt, besteht die Innenschicht aus HDPE bzw. im Wesentlichen aus HDPE (High-density polyethylene). Dieser Werkstoff hat sich im Hinblick auf die Lösung des technischen Problems besonders bewährt. Diese Innenschicht wirkt gegenüber den Komponenten des die Rohrleitung durchströmenden Kraftstoffes bzw. Kraftstoffdampfes gleichsam als Sperrschicht und zeichnet sich durch eine sehr geringe Auswaschung von Schichtkomponenten aus. - Es liegt im Rahmen der Erfindung, dass die Dicke der Innenschicht 5 % bis 55 %, vorzugsweise 7 % bis 50 % und bevorzugt 10 % bis 40 % der Gesamtwanddicke der Rohrleitung beträgt. Zweckmäßigerweise beträgt die Dicke der Innenschicht 0,05 bis 0,45 mm, vorzugsweise 0,05 bis 0,4 mm und bevorzugt 0,1 bis 0,35 mm. Es liegt im Rahmen der Erfindung, dass die Dicke der Innenschicht geringer ist als die Dicke der Trägerschicht. Wenn gemäß der oben erläuterten Ausführungsform die Zwischenschicht aus Polyamid, insbesondere aus Polyamid 6 besteht bzw. im Wesentlichen besteht, liegt es weiterhin im Rahmen der Erfindung, dass die Dicke der Innenschicht geringer ist als diese zweite Trägerschicht aus Polyamid. Gemäß einer Ausführungsvariante der Erfindung wird die Innenschicht als elektrisch leitfähige Schicht eingerichtet und dazu mit Leitfähigkeitszusätzen versehen.

Wenn entsprechend der oben erläuterten Ausführungsform die Zwischenschicht aus Polyamid, insbesondere aus Polyamid besteht bzw. im Wesentlichen besteht (zweite Trägerschicht) liegt es fernerhin im Rahmen der Erfindung, dass diese Zwischenschicht bzw. zweite Trägerschicht eine größere Dicke aufweist als die Sperrschicht. Die erste Trägerschicht und/oder die zweite Trägerschicht ist zweckmäßigerweise mindestens 1,2-mal, vorzugsweise mindestens 1,5-mal und bevorzugt mindestens 1,8-mal dicker als die Sperrschicht. - Gemäß sehr bevorzugter Ausführungsform der Erfindung weist die erste Trägerschicht und/oder die zweite Trägerschicht eine größere Dicke auf als die Innenschicht. Zweckmäßigerweise ist dabei die erste Trägerschicht und/oder die zweite Trägerschicht mindestens 1,2-mal und vorzugsweise mindestens 1,4-mal sowie bevorzugt mindestens 1,5-mal dicker als die Innenschicht. - Es liegt im Rahmen der Erfindung, dass die Außenschicht eine größere Dicke aufweist als die Sperrschicht. Vorzugsweise ist die Außenschicht mindestens 1,1-mal und bevorzugt mindestens 1,2-mal dicker als die Sperrschicht. - Gemäß empfohlener Ausführungsform der Erfindung ist die erste Trägerschicht und/oder die zweite Trägerschicht dicker als die Außenschicht. Vorzugsweise ist die erste Trägerschicht und/oder die zweite Trägerschicht mindestens 1,2-mal und bevorzugt mindestens 1,3-mal dicker als die Außenschicht.

Es liegt im Rahmen der Erfindung, dass die Außenschicht einen optimalen Schutz gegen Umwelteinflüsse gewährleistet. Zum Einen ist sie korrosionsbeständig bzw. chemisch resistent gegenüber Spritzwasser, insbesondere Salzwasser sowie chemisch resistent gegenüber Öl und Kraftstoff. Die beiden Trägerschichten gewährleisten insbesondere die mechanische Stabilität der erfindungsgemäßen Rohrleitung. Die Innenschicht hat wie die Sperrschicht eine Sperrwirkung und zwar insbesondere gegenüber den Komponenten des durch die Rohrleitung strömenden Kraftstoffes bzw. Kraftstoffdampfes.

Gemäß bevorzugter Ausführungsform der Erfindung wird die erfindungsgemäße Kraftfahrzeug-Rohrleitung durch Extrusion bzw. Koextrusion der Schichten hergestellt. Mit den erfindungsgemäßen Schichtkomponenten ist eine sehr einfache Koextrusion möglich und vor allem ist die Koextrusion bei moderaten Temperaturen durchführbar. - Die erfindungsgemäße Rohrleitung kann im Übrigen als glattes unprofiliertes Rohr oder auch als Wellrohr ausgebildet werden.

Der Erfindung liegt die Erkenntnis zugrunde, dass die erfindungsgemäße Kraftfahrzeug-Rohrleitung eine ausgezeichnete chemische Resistenz aufweist und vor allem gegenüber Auswaschungen von Schichtkomponenten resistent ist. Das gilt vor allem für die Innenschicht aber auch für die angrenzenden Schichten. Die erfindungsgemäße Rohrleitung weist optimale Barriereeigenschaften sowie eine sehr gute Kraftstoff- und Alterungsbeständigkeit auf. Von besonderem Vorteil ist dabei, dass ein und dieselbe erfindungsgemäße Rohrleitung für verschiedene Kraftstoffe eingesetzt werden kann und gegenüber diesen verschiedenen Kraftstoffen die vorgenannten Vorteile bietet. Hervorzuheben ist, dass die erfindungsgemäße Rohrleitung neben der erläuterten chemischen Resistenz auch eine ausgezeichnete mechanische Widerstandsfähigkeit aufweist. Fernerhin zeichnet sich die erfindungsgemäße Rohrleitung durch eine optimale thermische Resistenz aus und die Rohrleitung kann problemlos in einem Temperaturbereich zwischen -40°C und 140°C eingesetzt werden. Gegenüber vielen bislang bekannten Rohrleitungen ist die erfindungsgemäße Rohrleitung fernerhin sehr kostengünstig bzw. aus sehr kostengünstigen Materialien herstellbar. Zu betonen ist fernerhin, dass sich die Materialien der Schichten der erfindungsgemäßen Rohrleitung sehr einfach verarbeiten lassen und vor allem eine einfache und problemlose Koextrusion der erfindungsgemäßen Schichtenfolge möglich ist.

Nachfolgend wird die Erfindung anhand von Ausführungsbeispielen näher erläutert:
Gemäß einem ersten Ausführungsbeispiel besteht die Außenschicht der erfindungsgemäßen Rohrleitung aus Polyamid 12 bzw. im Wesentlichen aus Polyamid 12 und diese Außenschicht hat empfohlenermaßen eine Dicke von 0,15 bis 0,4 mm. An die Außenschicht schließt vorzugsweise innenseitig unmittelbar eine Haftvermittlerschicht an, die bevorzugt aus einem mit Maleinsäureanhydrid modifizierten Polyamid, insbesondere Polyamid 612 besteht. Die Haftvermittlerschicht weist zweckmäßigerweise eine Dicke von 0,03 bis 0,1 mm auf. Unmittelbar an diese Haftvermittlerschicht schließt innenseitig die erste Trägerschicht an, die aus Polyamid 6 bzw. im Wesentlichen aus Polyamid 6 besteht. Sie weist bevorzugt eine Schichtdicke von 0,25 bis 0,75 mm auf. Innenseitig an die erste Trägerschicht schließt unmittelbar die Sperrschicht an, die aus EVOH bzw. im Wesentlichen aus EVOH besteht und vorzugsweise eine Schichtdicke von 0,05 bis 0,3 mm aufweist. An die Sperrschicht schließt innenseitig unmittelbar die Zwischenschicht in Form einer zweiten Trägerschicht an, die aus Polyamid 6 bzw. im Wesentlichen aus Polyamid 6 besteht und empfohlenermaßen eine Schichtdicke von 0,25 bis 0,75 mm aufweist. Innenseitig an die zweite Trägerschicht schließt die Innenschicht an, die aus HDPE bzw. im Wesentlichen aus HDPE besteht und bevorzugt eine Schichtdicke von 0,05 bis 0,4 mm aufweist. Die Gesamtwandstärke dieser Rohrleitung liegt vorzugsweise im Bereich zwischen 0,7 und 2 mm.

Nachfolgend wird die Erfindung anhand einer lediglich ein Ausführungsbeispiel darstellenden Zeichnung näher erläutert. Es zeigen in schematischer Darstellung:

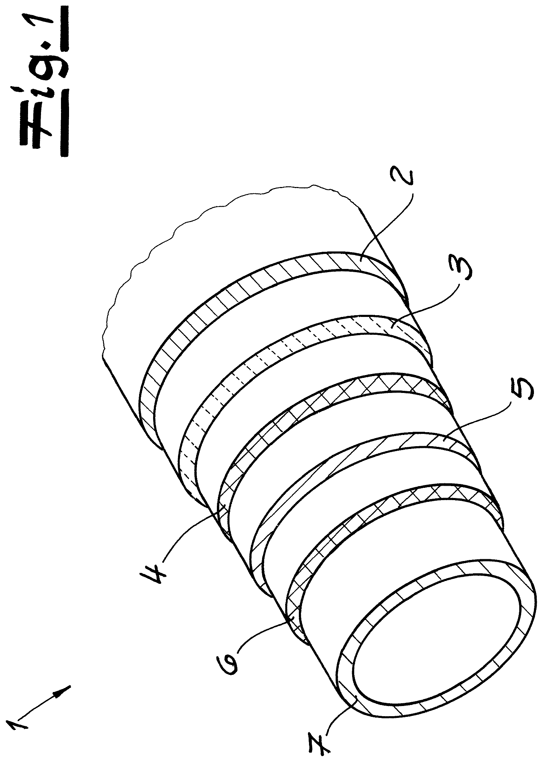

- **Fig. 1**: eine perspektivische Ansicht einer erfindungsgemäßen Rohrleitung und

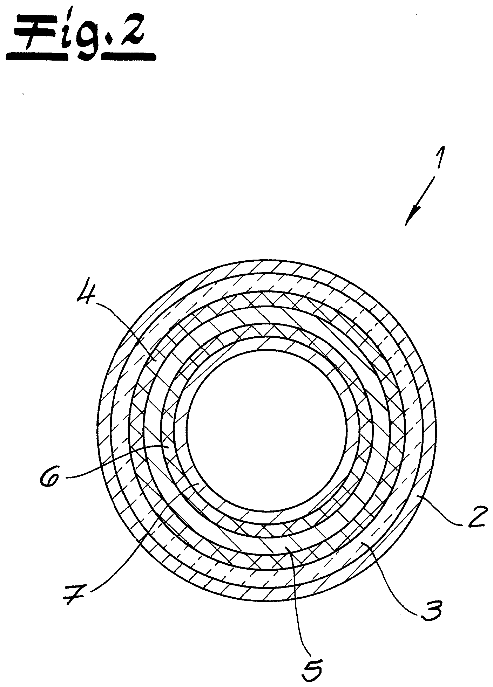

- **Fig. 2**: einen Schnitt durch den Gegenstand gemäß Fig. 1.

Im Ausführungsbeispiel nach den Figuren weist die erfindungsgemäße Rohrleitung 1 eine Außenschicht 2 auf, die aus Polyamid 12 bzw. im Wesentlichen aus Polyamid 12 besteht und bevorzugt eine Schichtdicke zwischen 0,2 und 0,4 mm aufweist. An diese Außenschicht 2 schließt innenseitig eine Haftvermittlerschicht 3 an, die vorzugsweise und im Ausführungsbeispiel aus mit Maleinsäureanhydrid mofifiziertem Polyamid 612 besteht. Daran schließt innenseitig die erste Trägerschicht 4 an, die bevorzugt und im Ausführungsbeispiel aus Polyamid 6 bzw. im Wesentlichen aus Polyamid 6 besteht und zweckmäßigerweise eine Schichtdicke zwischen 0,2 und 0,75 mm aufweist. Innenseitig an diese erste Trägerschicht 4 schließt die Sperrschicht 5 an, die bevorzugt und im Ausführungsbeispiel aus EVOH bzw. im Wesentlichen aus EVOH besteht und empfohlenermaßen eine Schichtdicke zwischen 0,1 und 0,3 mm aufweist. An diese Sperrschicht 5 schließt innenseitig die Zwischenschicht 6 in Form einer zweiten Trägerschicht an, die aus Polyamid 6 bzw. im Wesentlichen aus Polyamid 6 besteht und bevorzugt eine Schichtdicke zwischen 0,2 und 0,75 mm aufweist. Innenseitig an die Zwischenschicht 6 schließt die Innenschicht 7 an, die aus HDPE bzw. im Wesentlichen aus HDPE besteht und vorzugsweise eine Schichtdicke zwischen 0,1 und 0,4 mm aufweist. Die in den Figuren dargestellte mehrschichtige Kraftfahrzeug-Rohrleitung 1 wurde durch Koextrusion hergestellt. Es liegt im Rahmen der Erfindung, dass die Innenschicht 7 mit Leifähigkeitszusätzen versehen werden kann.

## Patentansprüche

1. Mehrschichtige Kraftfahrzeug-Rohrleitung (1), insbesondere zur Durchleitung von Kraftstoffen, wobei die Rohrleitung (1) zumindest fünf Schichten aufweist und zwar mit folgendem Schichtaufbau von außen nach innen:
- eine Außenschicht (2) aus zumindest einem Polyamid,
- eine erste Trägerschicht (4) aus Polyamid,
- eine Sperrschicht (5) aus zumindest einer Komponente aus der Gruppe "EVOH, Fluorpolymer",
- eine Zwischenschicht (6),
- eine Innenschicht (7) aus Polyethylen,
wobei die Dicke der ersten Trägerschicht (4) mindestens 1,2-mal dicker ist als die Sperrschicht (5)
und wobei die Gesamtschichtdicke der Rohrleitung (1) 0,7 bis 2,5 mm, vorzugsweise 0,8 bis 2 mm und bevorzugt 0,85 bis 1,8 mm beträgt.

2. Rohrleitung nach Anspruch 1, wobei die Außenschicht (2) aus Polyamid 12 bzw. im Wesentlichen aus Polyamid 12 besteht.

3. Rohrleitung nach einem der Ansprüche 1 oder 2, wobei die Dicke der Außenschicht 5 % bis 60 %, vorzugsweise 7 % bis 45 % der Gesamtwanddicke der Rohrleitung (1) beträgt.

4. Rohrleitung nach einem der Ansprüche 1 bis 3, wobei zwischen der Außenschicht (2) und der ersten Trägerschicht (4) zumindest eine Haftvermittlerschicht (3), vorzugsweise eine Haftvermittlerschicht (3) zwischengeschaltet ist.

5. Rohrleitung nach Anspruch 4, wobei die Dicke der Haftvermittlerschicht (3) 3 % bis 30 %, bevorzugt 5 % bis 20 % der Gesamtwanddicke der Rohrleitung (1) beträgt.

6. Rohrleitung nach einem der Ansprüche 1 bis 5, wobei die erste Trägerschicht (4) aus Polyamid 6 bzw. im Wesentlichen aus Polyamid 6 besteht.

7. Rohrleitung nach einem der Ansprüche 1 bis 5, wobei die erste Trägerschicht (4) aus zumindest einem bzw. einem Polyamid aus der Gruppe "Polyamid 612, Polyamid 12, Polyamid 10, Polyamid 11, Co-Polyamid 6/6.6, Co-Polyamid 6/12" besteht bzw. im Wesentlichen besteht.

8. Rohrleitung nach einem der Ansprüche 1 bis 7, wobei die Dicke der ersten Trägerschicht (4) 5 % bis 70 %, vorzugsweise 10 % bis 60 % und bevorzugt 15 % bis 60 % der Gesamtwanddicke der Rohrleitung (1) beträgt.

9. Rohrleitung nach einem der Ansprüche 1 bis 8, wobei die Dicke der Sperrschicht (5) 5 % bis 50 %, bevorzugt 10 % bis 40 % der Gesamtwanddicke der Rohrleitung (1) beträgt.

10. Rohrleitung nach einem der Ansprüche 1 bis 9, wobei die Zwischenschicht (6) als zweite Trägerschicht ausgebildet ist und aus Polyamid 6 bzw. im Wesentlichen aus Polyamid 6 besteht.

11. Rohrleitung nach einem der Ansprüche 1 bis 9, wobei die Zwischenschicht (6) bzw. die zweite Trägerschicht (6) aus zumindest einem bzw. einem Polyamid aus der Gruppe "Polyamid 612, Polyamid 12, Polyamid 10, Polyamid 11, Co-Polyamid 6/6.6, Co-Polyamid 6/12" besteht bzw. im Wesentlichen besteht.

12. Rohrleitung nach einem der Ansprüche 1 bis 11, wobei die Dicke der Zwischenschicht (6) 5 % bis 70 %, vorzugsweise 10 % bis 60 % und bevorzugt 15 % bis 60 % der Gesamtwanddicke der Rohrleitung (1) beträgt.

13. Rohrleitung nach einem der Ansprüche 1 bis 9 oder 12, wobei die Zwischen-schicht (6) als Haftvermittlerschicht ausgebildet ist und vorzugsweise eine Haftvermittlerschicht auf Basis eines Polyamids oder eine Haftvermittlerschicht auf Basis eines Polyolefins ist.

14. Rohrleitung nach einem der Ansprüche 1 bis 13, wobei die Innenschicht (7) aus HDPE bzw. im Wesentlichen aus HDPE besteht.

15. Rohrleitung nach einem der Ansprüche 1 bis 14, wobei die Dicke der Innenschicht 5 % bis 55 %, vorzugsweise 7 % bis 50 % und bevorzugt 10 % bis 40 % der Gesamtwanddicke der Rohrleitung (1) beträgt.

16. Rohrleitung nach einem der Ansprüche 1 bis 15, wobei die erste Trägerschicht (4) eine größere Dicke aufweist als die Innenschicht (7).

17. Rohrleitung nach einem der Ansprüche 1 bis 16, wobei die Außenschicht (2) eine größere Dicke aufweist als die Sperrschicht (5).

18. Rohrleitung nach einem der Ansprüche 1 bis 17, wobei die Rohrleitung durch Koextrusion hergestellt ist.

## Claims

1. A multilayer motor vehicle pipe (1), in particular for passing fuels through, wherein the pipe (1) has at least five layers, specifically with the following layer structure from the outside in:
- an outer layer (2) comprised of at least one polyamide,
- a first carrier layer (4) comprised of polyamide,
- a barrier layer (5) comprised of at least one component from the group "EVOH, fluoropolymer",
- an intermediate layer (6),
- an inner layer (7) comprised of polyethylene,
wherein the thickness of the first carrier layer (4) is at least 1.2 times thicker than the barrier layer (5),
and wherein the overall layer thickness of the pipe (1) measures 0.7 to 2.5 mm, preferably 0.8 to 2 mm, and preferentially 0.85 to 1.8 mm.

2. The pipe according to claim 1, wherein the outer layer (2) consists of polyamide 12 or at least essentially of polyamide 12.

3. The pipe according to one of claims 1 or 2, wherein the thickness of the outer layer measures 5 % to 60 %, preferably 7 % to 45 % of the overall wall thickness of the pipe (1).

4. The pipe according to one of claims 1 to 3, wherein at least one bonding layer (3), preferably one bonding layer (3), is interspersed between the outer layer (2) and the first carrier layer (4).

5. The pipe according to claim 4, wherein the thickness of the bonding layer (3) measures 3 % to 30 %, preferably 5 % to 20 % of the overall wall thickness of the pipe (1) .

6. The pipe according to one of claims 1 to 5, wherein the first carrier layer (4) consists of polyamide 6 or essentially of polyamide 6.

7. The pipe according to one of claims 1 to 5, wherein the first carrier layer (4) consists or essentially consists of at least one or one polyamide from the group "polyamide 612, polyamide 12, polyamide 10, polyamide 11, co-polyamide 6/6.6, co-polyamide 6/12".

8. The pipe according to one of claims 1 to 7, wherein the thickness of the first carrier layer (4) measures 5 % to 70 %, preferably 10 % to 60 %, and preferentially 15 % to 60 % of the overall wall thickness of the pipe (1) .

9. The pipe according to one of claims 1 to 8, wherein the thickness of the barrier layer (5) measures 5 % to 50 %, preferably 10 % to 40 % of the overall wall thickness of the pipe (1).

10. The pipe according to one of claims 1 to 9, wherein the intermediate layer (6) is designed as a second carrier layer, and consists of polyamide 6 or essentially of polyamide 6.

11. The pipe according to one of claims 1 to 9, wherein the intermediate layer (6) or the second carrier layer (6) consists or essentially consists of at least one or one polyamide from the group "polyamide 612, polyamide 12, polyamide 10, polyamide 11, co-polyamide 6/6.6, co-polyamide 6/12".

12. The pipe according to one of claims 1 to 11, wherein the thickness of the intermediate layer (6) measures 5 % to 70 %, preferably 10 % to 60 %, and preferentially 15 % to 60 % of the overall wall thickness of the pipe (1) .

13. The pipe according to one of claims 1 to 9 or 12, wherein the intermediate layer (6) is designed as a bonding layer, and preferably is a bonding layer based on a polyamide or a bonding layer based on a polyolefin.

14. The pipe according to one of claims 1 to 13, wherein the inner layer (7) consists of HDPE or essentially of HDPE.

15. The pipe according to one of claims 1 to 14, wherein the thickness of the inner layer measures 5 % to 55 %, preferably 7 % to 50 %, and preferentially 10 % to 40 % of the overall wall thickness of the pipe (1).

16. The pipe according to one of claims 1 to 15, wherein the first carrier layer (4) has a larger thickness than the inner layer (7).

17. The pipe according to one of claims 1 to 16, wherein the outer layer (2) has a larger thickness than the barrier layer (5).

18. The pipe according to one of claims 1 to 17, wherein the pipe is manufactured via coextrusion.

## Revendications

1. Conduite multicouche pour véhicule automobile multicouche (1), en particulier faire passer des carburants, sachant que la conduite (1) comporte au moins cinq couches, et à savoir avec une structure de couches suivante de l'extérieur vers l'intérieur :
- une couche extérieure (2) composée d'au moins un polyamide,
- une première couche porteuse (4) en polyamide,
- une couche barrière (5) composée d'au moins un composant du groupe « Ethylène-Alcool vinylique (EVOH), fluoropolymère »,
- une couche intermédiaire (6),
- une couche intérieure (7) en polyéthylène,
sachant que l'épaisseur de la première couche porteuse (4) est au moins 1,2 fois plus épaisse que la couche barrière (5)
et sachant que l'épaisseur de couche totale de la conduite (1) est de 0,7 à 2,5 mm, de préférence 0,8 à 2 mm et de façon préférée de 0,85 à 1,8 mm.

2. Conduite selon la revendication 1, sachant que la couche extérieure (2) est composée de polyamide 12 ou pour l'essentiel de polyamide 12.

3. Conduite selon l'une quelconque des revendications 1 ou 2, sachant que l'épaisseur de la couche extérieure représente 5 % à 60 %, de préférence 7 % à 45 % de l'épaisseur de paroi totale de la conduite (1).

4. Conduite selon l'une quelconque des revendications 1 à 3, sachant qu'au moins une couche d'agent adhésif (3), de préférence une couche d'agent adhésif (3) est intercalée entre la couche extérieure (2) et la première couche porteuse (4).

5. Conduite selon la revendication 4, sachant que l'épaisseur de la couche d'agent adhésif (3) représente 3 % à 30 %, de préférence 5 % à 20 % de l'épaisseur de paroi totale de la conduite (1).

6. Conduite selon l'une quelconque des revendications 1 à 5, sachant que la première couche porteuse (4) est composée de polyamide 6 ou pour l'essentiel de polyamide 6.

7. Conduite selon l'une quelconque des revendications 1 à 5, sachant que première couche porteuse (4) est composée ou pour l'essentiel composée d'au moins un ou d'un polyamide du groupe : « Polyamide 612, Polyamide 12, Polyamide 10, Polyamide 11, Copolyamide 6/6.6, Copolyamide 6/12 ».

8. Conduite selon l'une quelconque des revendications 1 à 7, sachant que l'épaisseur de la première couche porteuse (4) représente 5 % à 70 %, de préférence 10 % à 60 % et de façon préférée 15 % à 60 % de l'épaisseur de paroi totale de la conduite (1).

9. Conduite selon l'une quelconque des revendications 1 à 8, sachant que l'épaisseur de la couche barrière (5) représente 5 % à 50 %, de préférence 10 % à 40 % de l'épaisseur de paroi totale de la conduite (1).

10. Conduite selon l'une quelconque des revendications 1 à 9, sachant que la couche intermédiaire (6) est constituée sous la forme d'une deuxième couche porteuse et est composée de Polyamide 6 ou pour l'essentiel de Polyamide 6.

11. Conduite selon l'une quelconque des revendications 1 à 9, sachant que la couche intermédiaire (6) ou la deuxième couche porteuse (6) est composée ou pour l'essentiel composée au moins d'un ou d'un polyamide du groupe: « Polyamide 612, polyamide 12, Polyamide 10, Polyamide 11, Copolyamide 6/6.6, Copolyamide 6/12 ».

12. Conduite selon l'une quelconque des revendications 1 à 11, sachant que l'épaisseur de la couche intermédiaire (6) représente 5 % à 70 %, de préférence 10 % à 60 % et de façon préférée 15 % à 60 % de l'épaisseur de paroi totale de la conduite (1).

13. Conduite selon l'une quelconque des revendications 1 à 9 ou 12, sachant que la couche intermédiaire (6) est constituée sous la forme d'une couche d'agent adhésif et est de préférence une couche d'agent adhésif sur la base d'un polyamide ou une couche d'agent adhésif sur la base d'une polyoléfine.

14. Conduite selon l'une quelconque des revendications 1 à 13, sachant que la couche intérieure (7) est en polyéthylène de haute densité (PEHD), pour l'essentiel en PEHD.

15. Conduite selon l'une quelconque des revendications 1 à 14, sachant que l'épaisseur de la couche intérieure représente 5 % à 55 %, de préférence 7 % à 50 % et de façon préférée 10 % à 40 % de l'épaisseur de paroi totale de la conduite (1).

16. Conduite selon l'une quelconque des revendications 1 à 15, sachant que la première couche porteuse (4) comporte une épaisseur plus grande que la couche intérieure (7).

17. Conduite selon l'une quelconque des revendications 1 à 16, sachant que la couche extérieure (2) comporte une épaisseur plus grande que la couche barrière (5).

18. Conduite selon l'une quelconque des revendications 1 à 17, sachant que la conduite est fabriquée par coextrusion.
